# EUROPEAN PATENT APPLICATION

(11) **EP 4 664 604 A1**
(43) Date of publication of application: **17.12.2025**
(21) Application number: 24759497.1
(22) Date of filing: 30.01.2024
(51) Int. Cl.: H01M 10/613

(54) **BATTERY**

(30) Priority: 21.02.2023 CN 202310146276
(71) Applicant: Jiangsu Zenergy Battery Technologies Group Co., Ltd., Suzhou City, Jiangsu 215500 (CN)
(72) Inventor: JIN, Quanliang, Suzhou, Jiangsu 215500 (CN); DU, Junfeng, Suzhou, Jiangsu 215500 (CN); GUI, Hao, Suzhou, Jiangsu 215500 (CN); JI, Zhengyu, Suzhou, Jiangsu 215500 (CN); CHENG, Zhenxing, Suzhou, Jiangsu 215500 (CN); CAO, Yitao, Suzhou, Jiangsu 215500 (CN); YU, Hongjiang, Suzhou, Jiangsu 215500 (CN)
(74) Representative: WSL Patentanwälte Partnerschaft mbB
(86) International application number: PCT/CN2024/074773
(87) International publication number: WO 2024/174820

(57) **Abstract**

The present application relates to the field of energy storage devices, and discloses a battery, including battery cells, first heat exchange plates and insulating and heat conducting layers, wherein the battery cell is provided with an electrode column, and the electrode column has a heat exchange surface; the insulating and heat conducting layer is disposed between the heat exchange surface and the first heat exchange plate; and the insulating and heat conducting layer has a first side surface and a second side surface that are opposite to each other, the first side surface is attached to the first heat exchange plate, and the second side surface is attached to the heat exchange surface or a metal part connected to the electrode column. The present application effectively improves the heat dissipation effect of the battery.

## Description

### Cross-Reference to Related Application

The present disclosure claims priority and the benefit of the Patent Application filed with the China National Intellectual Property Administration (CNIPA) on February 21, 2023, with the application number 202310146276.X, entitled "Battery", which is herein incorporated by reference in its entirety.

### Technical Field

The present disclosure relates to the technical field of energy storage devices, and in particular to a battery.

### Background

At present, a box body, a cooling assembly and several battery cells are combined to form a battery. When the battery cell heats up, heat is transferred to a cooling plate of the cooling assembly by a housing of the battery cell, and the cooling plate is generally disposed on one side of the bottom of the housing.

The related art has the following technical defects: one of the most serious heating components of the battery cell is an electrode terminal, the heat of the electrode terminal needs to be first transferred to the housing, and then is transferred into the cooling plate, which easily leads to a heat accumulation situation in an electrode terminal area, resulting in an excessively high temperature of the battery cell.

In view of this, it is necessary to design a battery to better improve the heat dissipation effect of the battery.

### Summary

Some embodiments of the present disclosure are to provide a battery, so as to better improve the heat dissipation effect of the battery.

In an embodiment of the present disclosure, the present disclosure adopts the following technical solutions:
A battery, including a battery cell, a first heat exchange plate, and an insulating and heat conducting layer, wherein
the battery cell is provided with an electrode terminal, and the electrode terminal has a heat exchange surface; and the insulating and heat conducting layer is arranged between the heat exchange surface and the first heat exchange plate;
the insulating and heat conducting layer has a first side surface and a second side surface that are opposite to each other, the first side surface is attached to the first heat exchange plate, and the second side surface is attached to the heat exchange surface or a metal part connected to the electrode terminal; and
a mounting groove is formed in the first heat exchange plate, the electrode terminal is arranged in the mounting groove, and the heat exchange surface at least includes one side surface of the electrode terminal.

In an embodiment, the battery cell includes a cover plate, and the electrode terminal is arranged on the cover plate; and
in a direction perpendicular to a plate surface of the cover plate, a projection area of the electrode terminal projecting to the plate surface is greater than 20% of an area of the plate surface and less than 80% of the area of the plate surface.

In an embodiment, the electrode terminal is a columnar structure extending in the direction perpendicular to the plate surface of the cover plate, and the heat exchange surface includes a top surface of the electrode terminal that is away from the cover plate.

In an embodiment, the electrode terminal has a first side surface and a second side surface that are opposite to each other, the mounting groove has a first groove side wall and a second groove side wall that are opposite to each other, and the heat exchange surface includes the first side surface and the second side surface; and
the first side surface is attached to the first groove side wall in an insulating manner, and the second side surface is attached to the second groove side wall in the insulating manner.

In an embodiment, the first side surface and the second side surface are both arc surfaces, a shape of the first groove side wall matches that of the first side surface, and a shape of the second groove side wall matches that of the second side surface; and/or

In an embodiment, the mounting groove is a trench, and in an extension direction perpendicular to the trench, a section of the trench is a rectangular, a V-shaped, an U-shaped, or a trapezoidal.

In an embodiment, the first heat exchange plate is located on a bottom of the battery cell; or the first heat exchange plate is located on a top of the battery cell.

In an embodiment, the electrode terminal includes a base table portion and a strip-shaped insertion portion arranged on the base table portion; and
a shape of the mounting groove matches a shape of the strip-shaped insertion portion, and the heat exchange surface at least includes one side surface of the strip-shaped insertion portion.

In an embodiment, the base table portion has a table top facing the first heat exchange plate, and the heat exchange surface further includes the table top; and
the table top is at least partially attached to the first heat exchange plate in the insulating manner.

In an embodiment, the battery cell is provided with an explosion-proof valve, the explosion-proof valve and the electrode terminal are arranged on the same side surface of the battery cell, a first accommodating groove is formed in the first heat exchange plate, a fire extinguishing agent is packaged in the first accommodating groove, a packaging sheet is formed on the notch of the first accommodating groove, and the packaging sheet directly faces the explosion-proof valve; or
the battery cell is provided with an explosion-proof valve, the explosion-proof valve and the electrode terminal are arranged on two opposite side surfaces of the battery cell, the battery further includes a second heat exchange plate, the second heat exchange plate is arranged on a side of the battery cell that is away from the first heat exchange plate, and the second heat exchange plate is attached to a housing of the battery cell in the insulating manner, the explosion-proof valve is arranged on the housing, a second accommodating groove is formed in the second heat exchange plate corresponding to the explosion-proof valve, a fire extinguishing agent is packaged in the second accommodating groove, a packaging sheet is formed on the notch of the second accommodating groove, and the packaging sheet directly faces the explosion-proof valve.

In an embodiment, the battery cell is connected to a bus plate, and the bus plate is welded to the electrode terminal;
the bus plate is provided with an attachment plate portion, and an insulating and heat conducting member is arranged between the first heat exchange plate and the attachment plate portion; and
two opposite sides of the insulating and heat conducting member are attached to the attachment plate portion and the first heat exchange plate, respectively.

In an embodiment, a first heat exchange medium flow channel is arranged in the first heat exchange plate, wherein a plurality of first heat exchange medium flow channels are provided; and
the first heat exchange plate has a heat exchange area to be attached to the insulating and heat conducting layer, and the first heat exchange medium flow channel is arranged opposite to the heat exchange area.

In an embodiment, the battery further includes a side enclosure frame and a second heat exchange plate; and
the battery comprises a plurality of battery cells, and the side enclosure frame, the first heat exchange plate and the second heat exchange plate are combined to form a mounting space for mounting the plurality of battery cells, and the plurality of battery cells are arranged in the mounting space in an array.

In an embodiment, the first heat exchange plate includes a support beam portion and a heat exchange portion to be attached to the insulating and heat conducting layer, wherein a plurality of support beam portions are provided; and
the plurality of support beam portions are respectively connected to two opposite side edges of the heat exchange portion, and the plurality of support beam portions are fixedly connected with the side enclosure frame.

In an embodiment, the battery further includes a support beam;
the first heat exchange plate is located on a bottom of the battery cell to carry the battery cell; and
the support beam is fixedly connected with the side enclosure frame, and the first heat exchange plate is connected with the support beam.

In an embodiment, an assembly groove for accommodating the support beam is formed in the first heat exchange plate, and the support beam is at least partially located in the assembly groove; and/or
the support beam is fixedly connected with the side enclosure frame, and the first heat exchange plate is fixedly connected with the side enclosure frame.

In an embodiment, the battery further includes a bottom guard plate, and the bottom guard plate is located on a bottom of the first heat exchange plate to support the first heat exchange plate; and the bottom guard plate is fixedly connected with the side enclosure frame.

In an embodiment, the side enclosure frame is formed by combining a plurality of side plates;
a second heat exchange medium flow channel is arranged in each side plate of the plurality of side plates; and
the battery further includes a flow splitting assembly arranged in the mounting space; and the flow splitting assembly is connected with a water inlet pipe, and the flow splitting assembly includes a first connecting pipe in communication with the first heat exchange medium flow channel and a second connecting pipe in communication with the second heat exchange medium flow channel.

In an embodiment, the battery cell is provided with a positioning step, and the positioning step has a step surface; and
the support beam has a support surface for supporting the positioning step, and the step surface abuts against the support surface.

In an embodiment, a plurality of third heat exchange medium flow channels are arranged at intervals on the second heat exchange plate.

Compared with the related art, the present disclosure has the following beneficial effects:
in the present embodiment, the insulating and heat conducting layer is provided, and the two opposite side surfaces of the insulating and heat conducting layer are respectively attached to the first heat exchange plate and the heat exchange surface of the electrode terminal, so that the heat on the electrode terminal is directly transferred to the first heat exchange plate by the insulating and heat conducting layer, therefore the heat on the electrode terminal is quickly transferred to the first heat exchange plate, thereby effectively improving the heat dissipation effect of the battery.

### Brief Description of the Drawings

To illustrate technical solutions in the embodiments of the present disclosure or in the related art more clearly, a brief introduction on the drawings which are needed in the description of the embodiments or the related art is given below. Apparently, the drawings in the description below are merely some of the embodiments of the present disclosure, based on which other drawings may be obtained by those ordinary skilled in the art without any creative effort.

The structures, proportions, sizes and the like depicted in the drawings of the present specification are only used for cooperating with the content disclosed in the specification for the understanding and reading of those familiar with this art, and are not intended to limit implementable limiting conditions of the present disclosure, therefore having no substantive meaning in terms of technology. Any modification in the structure, change in the proportion relationship or adjustment in the size should still fall within the scope of the technical content disclosed in the present disclosure without affecting the effects and objectives which the present disclosure may implement.
Fig. 1 is a schematic diagram of a mounting structure of a battery provided in an embodiment of the present disclosure;
Fig. 2 is a schematic diagram of an exploded structure of a battery provided in an embodiment of the present disclosure;
Fig. 3 is a schematic top view of a battery provided in an embodiment of the present disclosure;
Fig. 4 is a schematic structural diagram of an A-A section in Fig. 3;
Fig. 5 is an enlarged schematic diagram of a location A in Fig. 4;
Fig. 6 is a schematic diagram of a sectional structure of a battery in another embodiment of the present disclosure;
Fig. 7 is an enlarged schematic diagram of a location B in Fig. 6;
Fig. 8 is a schematic structural diagram of an electrode terminal on a battery cell provided in an embodiment of the present disclosure;
Fig. 9 is a schematic diagram of a three-dimensional structure of a battery provided in an embodiment of the present disclosure;
Fig. 10 is a schematic top view of the battery in Fig. 9;
Fig. 11 is a schematic diagram of an axonometric section of the battery in Fig. 10 along a B-B section;
Fig. 12 is an enlarged schematic diagram of a location D in Fig. 11;
Fig. 13 is a schematic diagram of a mounting structure of a side enclosure frame and a support beam provided in an embodiment of the present disclosure;
Fig. 14 is a schematic diagram of a mounting structure of a first heat exchange plate and a second heat exchange plate provided in an embodiment of the present disclosure;
Fig. 15 is a schematic structural diagram of a battery cell provided in an embodiment of the present disclosure;
Fig. 16 is a schematic diagram of a mounting structure of a side enclosure frame, a first heat exchange plate, a support beam and a bottom guard plate provided in an embodiment of the present disclosure.

Reference signs: 1. battery cell; 11. electrode terminal; 101. base table portion; 102. strip-shaped insertion portion; and
12. heat exchange surface; 13. step surface; 14. explosion-proof valve; 2. first heat exchange plate; 201. first heat exchange medium flow channel; 21. mounting groove; 23. support beam portion; 24. heat exchange portion; 25. assembly groove; 3. insulating and heat conducting layer; 4. second heat exchange plate; 41. second accommodating groove; 6. support beam; 7. side enclosure frame; 71. side plate; 72. second heat exchange medium flow channel; 701. main body portion; 702. connecting portion; 8. bottom guard plate; 9. flow splitting assembly.

### Detailed Description of the Embodiments

In order to make the objectives, technical solutions and advantages of the present disclosure clearer, a clear and complete description of technical solutions in the embodiments of the present disclosure will be given below, in combination with the drawings in the embodiments of the present disclosure. Apparently, the embodiments described below are merely a part, but not all, of the embodiments of the present disclosure. All of other embodiments, obtained by those ordinary skilled in the art based on the embodiments in the present disclosure without any creative effort, fall into the protection scope of the present disclosure.

In the description of the present disclosure, it should be understood that orientation or location relationships indicated by terms "upper", "lower", "top", "bottom", "inside", "outside" and the like are generally orientation or location relationships shown on the basis of the drawings, and are merely for the convenience of describing the present disclosure and simplifying the description, but do not indicate or imply that the referred devices or elements must have specific orientations or must be constructed and operated in specific orientations, and thus cannot be construed as limitations to the present disclosure. It should be noted that when one assembly is considered to be "connected" to another assembly, it may be directly connected to the other assembly or there may be a centrally arranged assembly at the same time.

The technical solutions of the present disclosure are further described below with reference to the drawings and embodiments.

An embodiment of the present disclosure provides a battery, which may effectively improve the cooling effect for an electrode terminal 11, thereby facilitating an improvement on the cooling effect on the battery.

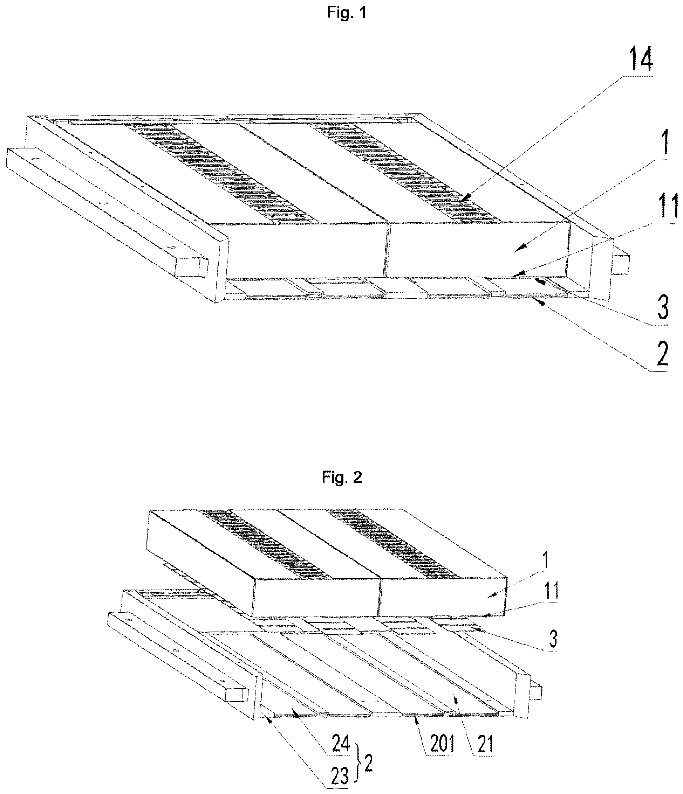

Referring to Figs. 1-5, the battery includes battery cells 1, first heat exchange plates 2 and insulating and heat conducting layers 3, wherein the battery cell 1 is also referred to as a battery core cell, and the battery herein may be a battery module or a battery pack, etc.

The battery cell 1 is provided with an electrode terminal 11, and the electrode terminal 11 has a heat exchange surface 12; and the insulating and heat conducting layer 3 has a first side surface and a second side surface that are opposite to each other, the first side surface of the insulating and heat conducting layer 3 is attached to the first heat exchange plate 2, and the second side surface of the insulating and heat conducting layer 3 is attached to the heat exchange surface 12 or a metal part connected to the electrode terminal 11.

In an embodiment, when the second side surface of the insulating and heat conducting layer 3 is attached to the heat exchange surface 12, the insulating and heat conducting layer 3 has a good heat conducting effect. Heat on the electrode terminal 11 may be quickly transferred to the insulating and heat conducting layer 3, then is transferred to the first heat exchange plate 2, and is taken away by the first heat exchange plate 2, thereby effectively improving the heat dissipation effect for the electrode terminal 11. It should also be noted that the insulating and heat conducting layer 3 is made of a material having both heat conducting and insulating properties, and the electrical resistivity of the insulating and heat conducting layer 3 serving as an insulating material is generally greater than 1010 Ω · m. The insulating and heat conducting layer 3 may be a heat-conducting silicone layer, an insulating conductive paint layer, or a ceramic layer having a good heat conducting effect, etc.

In another embodiment, the metal part, such as a bus plate, is connected to the electrode terminal 11, the heat on the electrode terminal 11 is quickly transferred to the insulating and heat conducting layer 3 by the metal part and then is transferred to the first heat exchange plate 2 by the insulating and heat conducting layer 3, and the heat is taken away by the first heat exchange plate 2, thereby effectively improving the heat dissipation effect for the electrode terminal 11. At present, the electrode terminal 11, the insulating and heat conducting layer 3 and the first heat exchange plate 2 may be sequentially stacked from top to bottom.

In an embodiment, the insulating and heat conducting layer 3 has elasticity, so that the insulating and heat conducting layer 3 is able to be better attached to a plate surface of the first heat exchange plate 2 and the heat exchange surface 12 of the electrode terminal 11, thereby further improving the heat exchange effect.

In an embodiment, the battery cell 1 includes a cover plate, and the electrode terminal 11 is arranged on the cover plate. In order to further improve the heat exchange efficiency, in a direction perpendicular to a plate surface of the cover plate, a projection area of the electrode terminal 11 projecting to the plate surface is greater than 20% of an area of the plate surface and less than 80% of the area of the plate surface. In an embodiment, the projection area of the electrode terminal 11 projecting to the plate surface is 35%-65% of the area of the plate surface. In the present embodiment, the projection area of the electrode terminal 11 projecting to the plate surface is increased, which is conducive to increasing the area of a single electrode terminal 11, and thus increasing a heat exchange area between the electrode terminal 11 and the first heat exchange panel 2. In addition, the volume of the electrode terminal 11 is relatively large, which is also conducive to increasing a connection area between the electrode terminal 11 and the bus plate, and reducing the connection resistance. In an embodiment, the projection area of a single electrode terminal 11 projecting to the plate surface is set to be 40% of the area of the plate surface, which ensures the heat exchange effect between the electrode terminal 11 and the first heat exchange panel 2 without leading to an excessively large volume of the electrode terminal 11.

In an embodiment, the electrode terminal 11 is a columnar structure extending in the direction perpendicular to the plate surface of the cover plate, and the heat exchange surface 12 includes a top surface of the electrode terminal 11 that is away from the cover plate. The heat exchange surface 12 may be composed of a plurality of surfaces, and for the electrode terminal 11, by setting the top surface away from the cover plate to be a portion of the heat exchange surface 12, it is conductive to reducing the assembly difficulty of the battery.

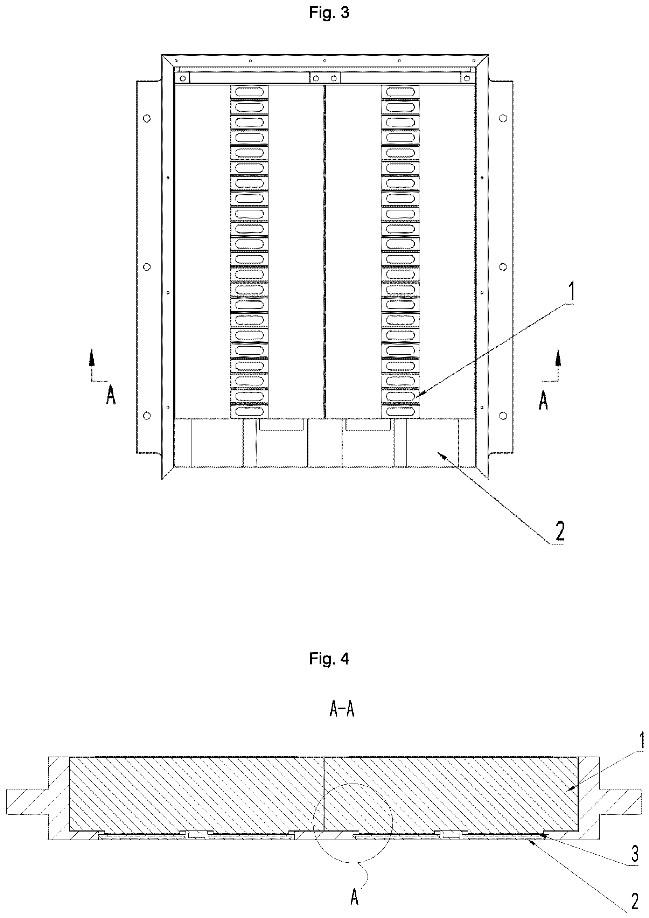

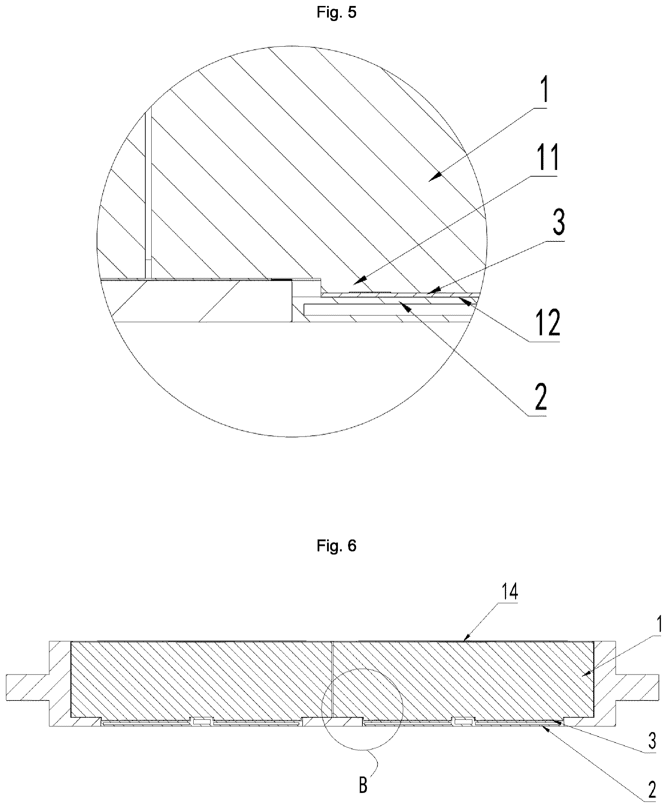

In an embodiment, referring to Fig. 6 to Fig. 7, a mounting groove 21 is formed in the first heat exchange plate 2; and the electrode terminal 11 is arranged in the mounting groove 21, and the heat exchange surface 12 at least includes one side surface of the electrode terminal 11. It should also be noted that compared with the structure in Fig. 4 to Fig. 5, the main difference of the battery in Fig. 6 to Fig. 7 lies in that the insulating and heat conducting layer 3 further covers two opposite side surfaces of the electrode terminal, and the two opposite side surfaces of the insulating and heat conducting layer 3 are respectively attached to the heat exchange surface 12 and the surface of the first heat exchange plate 2, and at this time, the bus plate may be connected to the other side surface of the electrode terminal 11. In the present embodiment, an attachment area between the insulating and heat conducting layer 3 and the electrode terminal 11 is greater, thereby further improving the attachment area and the heat transfer efficiency.

It should also be noted that for the structure of the battery in Fig. 4 to Fig. 5, a bus plate may also be welded to a top surface of the electrode terminal 11, and the insulating and heat conducting layer 3 is located between the bus plate and the first heat exchange plate 2.

In an embodiment, the electrode terminal 11 has a first side surface and a second side surface that are opposite to each other, the mounting groove 21 has a first groove side wall and a second groove side wall that are opposite to each other, and the heat exchange surface 12 includes the first side surface and the second side surface; and the first side surface is attached to the first groove side wall in an insulating manner, and the second side surface is attached to the second groove side wall in the insulating manner, that is, the insulating and heat conducting layer 3 is arranged between the first side surface and the first groove side wall, and the insulating and heat conducting layer 3 is arranged between the second side surface and the second groove side wall. It should also be noted that the insulating and heat conducting layers 3 may be arranged on the first side surface and the second side surface, or the insulating and heat conducting layers 3 are arranged on the first groove side wall and the second groove side wall, so as to ensure insulating attachment.

In an embodiment, the first side surface and the second side surface are both arc surfaces; and a shape of the first groove side wall matches that of the first side surface, and a shape of the second groove side wall matches that of the second side surface. The arc surfaces are conducive to increasing the attachment area, thereby facilitating an increase in the heat transfer area, so that the heat dissipation efficiency of the electrode terminal 11 of the battery cell 1 is higher.

In an embodiment, the mounting groove 21 is a trench, and in an extension direction perpendicular to the trench, a section of the trench is a rectangular, a V-shaped, an U-shaped, or a trapezoidal. In an embodiment, the trench with a V-shaped or trapezoidal section may enable the first side surface to be more easily attached to the first groove side wall in the insulating manner and enable the second side surface to be more easily attached to the second groove side wall in the insulating manner. In an embodiment, both ends of the trench are provided with sealing members, so that the electrode terminal 11 is sealed in the trench.

In an embodiment, the first heat exchange plate 2 is located on a bottom of the battery cell 1; and under the action of the gravity of the battery cell 1, the electrode terminal 11 is inserted into the mounting groove 21, the first side surface is attached to the first groove side wall in the insulating manner, and the second side surface is attached to the second groove side wall in the insulating manner. At this time, the gravity of the battery cell 1 may well ensure the location of the electrode terminal, so that the effect of attaching the first side surface to the first groove side wall in the insulating manner and the effect of attaching the second side surface to the second groove side wall in the insulating manner are better, and thus the heat of the electrode terminal 11 may be transferred to the first heat exchange plate 2 more quickly.

In an embodiment, the first heat exchange plate 2 is located on the top of the battery cell 1. It should be noted that the battery cell 1 is arranged positively and the electrode terminal 11 faces upwards, which is also within the protection scope of the present technical solution, as long as it is ensured that the two opposite side surfaces of the insulating and heat conducting layer 3 are respectively attached to the plate surface of the first heat exchange plate 2 and the heat exchange surface 12 of the electrode terminal 11, or it is ensured that the two opposite side surfaces of the insulating and heat conducting layer 3 are respectively attached to the plate surface of the first heat exchange plate 2 and arranged on the surface of the metal part on the electrode terminal.

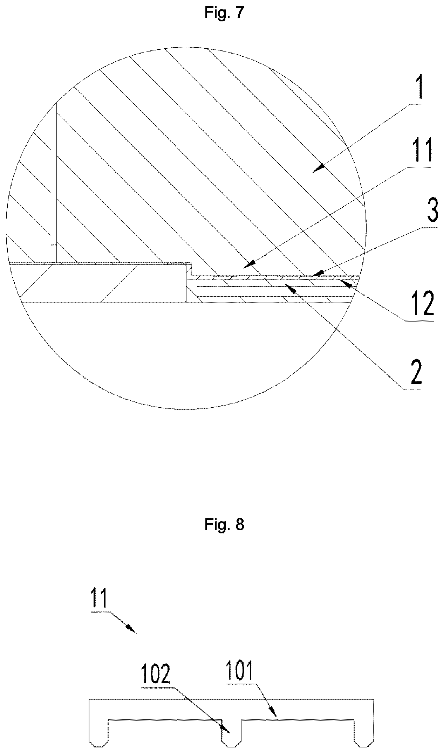

In an embodiment, as shown in Fig. 8, the electrode terminal 11 includes a base table portion 101 and a strip-shaped insertion portion 102 arranged on the base table portion 101; and a shape of the mounting groove 21 matches a shape of the strip-shaped insertion portion 102, and the heat exchange surface 12 at least includes one side surface of the strip-shaped insertion portion 102. At this time, the insulating and heat conducting layer 3 is arranged between the heat exchange surface 12 and the transverse E-shaped electrode terminal 11, which is equivalent to increasing the contact area of the electrode terminal 11, thereby facilitating an increase in an insulating contact area between the electrode terminal 11 and the first heat exchange plate 2, and thus facilitating an improvement in the heat conducting effect.

In the present embodiment, the base table portion 101 has a table top facing the first heat exchange plate 2, and the heat exchange surface 12 further includes the table top; and the table top herein refers to a bottom surface between two strip-shaped insertion portions 102. The table top is at least partially attached to the first heat exchange plate 2 in the insulating manner, so as to further improve the heat conducting effect, so that the heat on the electrode terminal 11 may be transferred to the first heat exchange plate 2 more quickly.

In an embodiment, the battery cell 1 is provided with an explosion-proof valve 14, the explosion-proof valve 14 and the electrode terminal 11 are arranged on the same side surface of the battery cell 1. In an embodiment, a first accommodating groove is formed in the first heat exchange plate 2, a fire extinguishing agent is packaged in the first accommodating groove, a packaging sheet is formed on the notch of the first accommodating groove, and the notch of the first accommodating groove directly faces the explosion-proof valve 14. When the battery cell 1 is overheating, the explosion-proof valve 14 is broken through, a high-temperature and high-pressure gas inside the battery may impact the packaging sheet, the packaging sheet is melted or broken through, and the first accommodating groove sprays the fire extinguishing agent to the explosion-proof valve 14 for fire extinguishing, thereby facilitating an improvement in the safety of the battery cell 1. The fire extinguishing material includes, but is not limited to, any one or a combination of heptafluoropropane, perfluoropolyether, perfluorohexanone, aerosol, haloalkane (halon), hydrofluoroalkyl compounds, or perfluoroalkyl compounds. The hydrofluoroalkyl compounds include, but are not limited to, R134A (an alternative refrigerant of R12), an R125 refrigerant, an R32 refrigerant, an R407C refrigerant, R410A (an alternative refrigerant of R22), or an R152 refrigerant. The perfluoroalkyl compounds include, but are not limited to, perfluorohexanone or perfluoropolyether.

In another embodiment, the battery cell 1 is provided with an explosion-proof valve 14, and the explosion-proof valve 14 and the electrode terminal 11 are arranged on two opposite side surfaces of the battery cell 1. In an embodiment, the battery further includes a second heat exchange plate 4, the second heat exchange plate 4 is arranged on a side of the battery cell 1 that is away from the first heat exchange plate 2, and the second heat exchange plate 4 is attached to a housing of the battery cell 1 in the insulating manner; the explosion-proof valve 14 is arranged on the housing, a second accommodating groove 41 is formed in the second heat exchange plate 4 corresponding to the explosion-proof valve 14, a fire extinguishing agent is packaged in the second accommodating groove 41, a packaging sheet is formed on the notch of the second accommodating groove 41, and the packaging sheet directly faces the explosion-proof valve 14.

When the explosion-proof valve 14 is broken through, the second accommodating groove 41 sprays the fire extinguishing agent to the explosion-proof valve 14, thereby facilitating an improvement in the safety of the battery cell 1. In addition, the heat of a gas with a higher temperature may be outputted to the outside by the second heat exchange plate 4, thereby avoiding an excessive safety accident of the battery cell. It should also be noted that a heat conducting and insulating protective layer is arranged between the second heat exchange plate 4 and the battery cell 1, and two opposite side surfaces of the heat conducting and insulating protective layer are respectively attached to the second heat exchange plate 4 and the housing of the battery cell 1.

In an embodiment, the battery cell 1 is connected to a bus plate, and the bus plate is welded to the electrode terminal 11; the bus plate is provided with an attachment plate portion, and an insulating and heat conducting member is arranged between the first heat exchange plate 2 and the attachment plate portion; and two opposite sides of the insulating and heat conducting member are attached to the attachment plate portion and the first heat exchange plate 2, respectively. In the present embodiment, the insulating and heat conducting member may transfer heat on the bus plate to the first heat exchange plate 2, so that the temperature of the bus plate is quickly reduced. When the battery cell 1 is in use, the heat on the electrode terminal 11 is transferred to the bus plate, since the insulating and heat conducting member is provided, it is conducive to further reducing the temperature of the electrode terminal 11, thereby being conducive to reducing the temperature of the battery cell 1, and thus ensuring that the battery cell 1 may always be kept in a relatively suitable working temperature. The insulating and heat conducting member may be a sheet structure formed by an insulating and heat conducting plate or an insulating and heat conducting adhesive layer, the sheet structure may be formed by coating an insulating and heat conducting adhesive on the first heat exchange plate 2, or coating the insulating and heat conducting adhesive on the attachment plate portion.

In an embodiment, a first heat exchange medium flow channel 201 is arranged in the first heat exchange plate 2, and a plurality of first heat exchange medium flow channels 201 are provided; and the first heat exchange plate 2 has a heat exchange area to be attached to the insulating and heat conducting layer 3, the first heat exchange medium flow channel 201 is arranged opposite to the heat exchange area, as shown in Fig. 2, the heat exchange area is located directly above the plurality of first heat exchange medium flow channels 201. When it is necessary to cool the electrode terminal 11, a liquid medium or a gaseous medium with a lower temperature may be input to the plurality of first heat exchange medium flow channels 201, so as to cool the electrode terminal 11. It should also be noted that if the battery is in a cold area with a high altitude or a high latitude, a liquid medium or a gaseous medium with a higher temperature may be input into the plurality of first heat exchange medium flow channels 201 of the first heat exchange plate 2 to heat the battery cell 1.

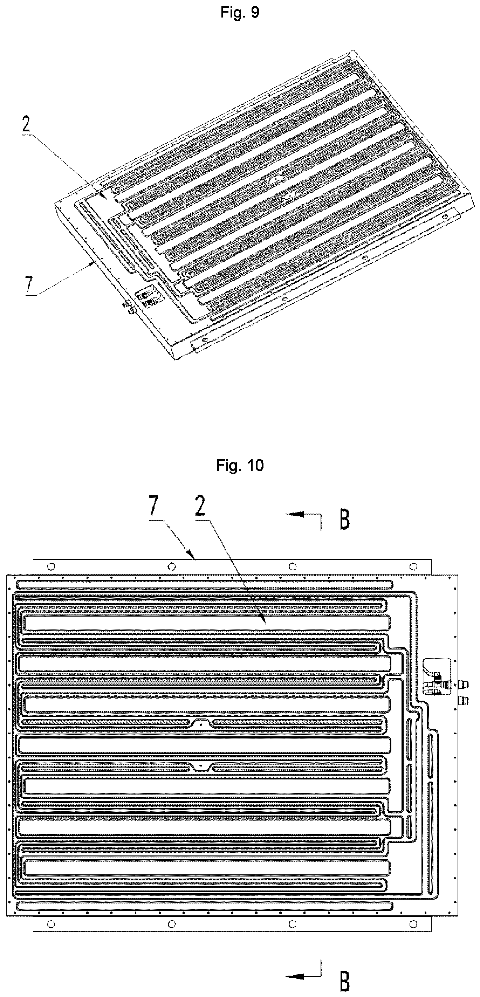

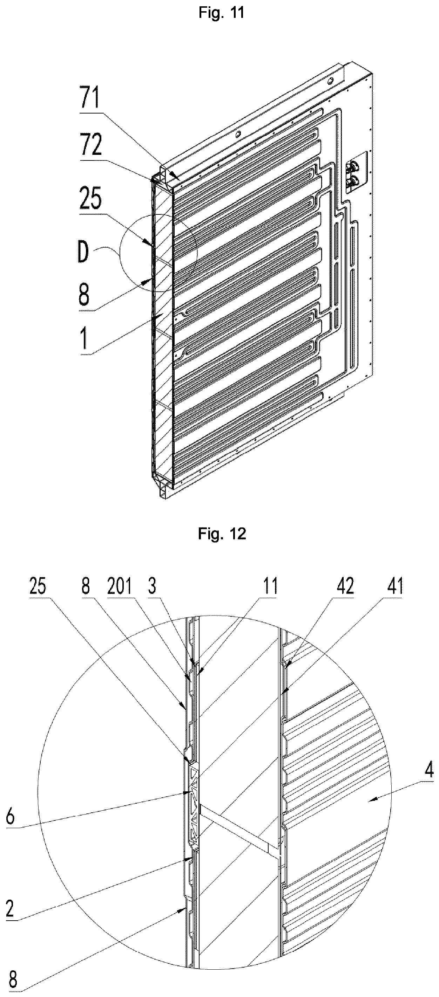

In an embodiment, as shown in Figs. 9-14, the battery further includes a side enclosure frame 7 and a second heat exchange plate 4, and the battery comprises a plurality of battery cells 1; and the side enclosure frame 7, the first heat exchange plate 2 and the second heat exchange plate 4 are combined to form a mounting space for mounting a plurality of battery cells 1, and the plurality of battery cells 1 are arranged in the mounting space in an array.

In an embodiment, the first heat exchange plate 2 includes a support beam portion 23 and a heat exchange portion 24 to be attached to the insulating heat conduction layer 3, wherein a plurality of support beam portions 23 are provided; and the plurality of support beam portions 23 are respectively connected to two opposite side edges of the heat exchange portion 24, and the plurality of support beam portions 23 are fixedly connected with the side enclosure frame 7. As shown in Fig. 2, the support beam portion 23 has a good support effect, thereby effectively improving the structural strength of the battery.

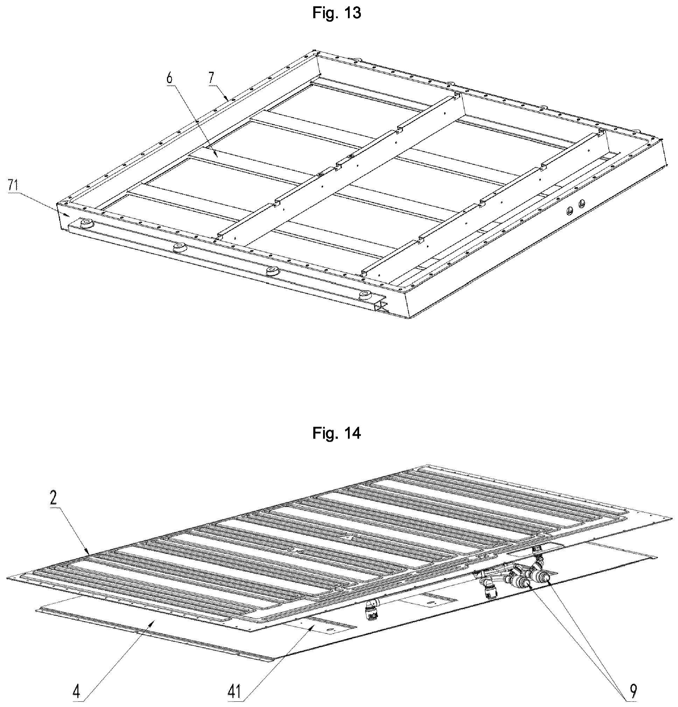

In another embodiment solution, as shown in Fig. 13, the battery further includes a support beam 6; the first heat exchange plate 2 is located on the bottom of the battery cell 1 to carry the battery cell 1; and the support beam 6 is fixedly connected with the side enclosure frame 7, and the first heat exchange plate 2 is connected with the support beam 6.

In an embodiment, by means of a split structure of the support beam 6 and the side enclosure frame 7, it is easier to assemble and disassemble the battery.

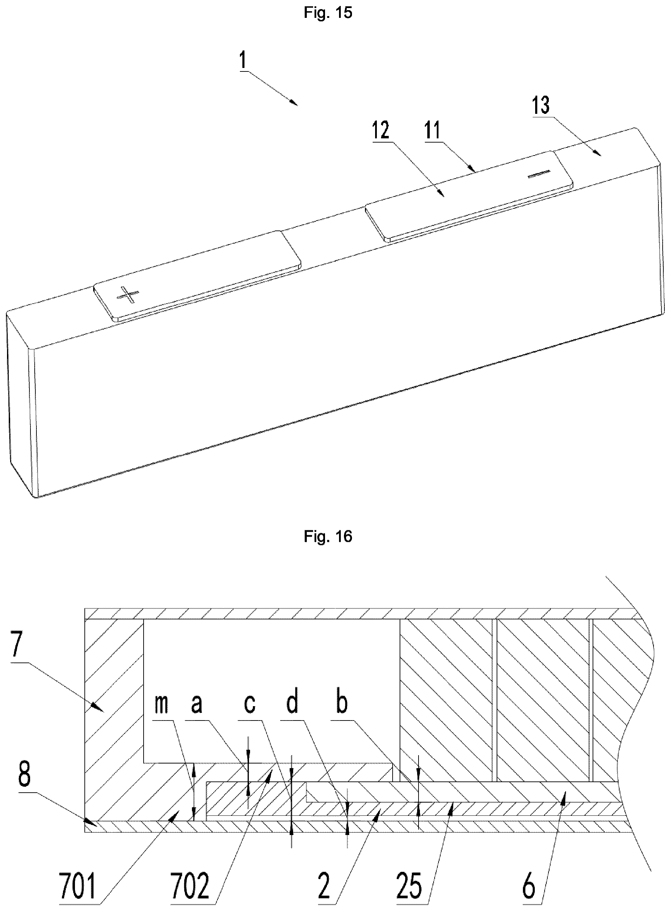

In an embodiment, an assembly groove 25 for accommodating the support beam 6 is formed in the first heat exchange plate 2, and the support beam 6 is at least partially located in the assembly groove 25. Since the assembly groove 25 is formed, and the support beam 6 is at least partially located in the assembly groove 25, it is conducive to reducing the overall height of the battery without excessively affecting the overall structural strength of the battery, and the overall integration level of the battery is also improved. As shown in Fig. 16, in an embodiment, the side enclosure frame 7 includes a main body portion 701 and a connecting portion 702, and the connecting portion is connected with the main body portion and extends in a direction towards the battery cell 1. The height of the main body portion 701 is m, and the height of the connecting portion 702 is a; the height of the support beam 6 is b, and the support beam 6 is arranged on a bottom of the connecting portion 702; the thickness of the first heat exchange plate 2 is c, and the first heat exchange plate 2 is located between the connecting portion 702 and the bottom guard plate 8; the height of a thermal insulation gap layer between the first heat exchange plate 2 and the bottom guard plate 8 is d, wherein m < a + b + c + d. The concave assembly groove 25 is formed in the side of the first heat exchange plate 2 that is close to the support beam 6, the notch of the assembly groove 25 is greater than or equal to the width of the support beam 6, and an extension length of the assembly groove 25 is greater than the length of the support beam 6, so that the support beam 6 may be arranged in the assembly groove 25. No cooling flow channel is arranged on a bottom of the assembly groove 25. After the first heat exchange plate 2 is connected with the side enclosure frame 7, the support beam 6 is at least partially accommodated in the assembly groove 25, thereby being conducive to reducing the overall height of the battery and improving the energy density of the battery.

In an embodiment, the support beam 6 is fixedly connected with the side enclosure frame 7, and the first heat exchange plate 2 is fixedly connected with the side enclosure frame 7, so as to prevent external dust or other substances from entering the battery.

It should be noted that the bottom guard plate 8 is located on the bottom of the first heat exchange plate 2; and the bottom guard plate 8 is fixedly connected with the side enclosure frame 7. By disposing the bottom guard plate 8, the first heat exchange plate 2 may be effectively prevented from being damaged. In addition, a thermal insulation gap layer is formed between the bottom guard plate 8 and the first heat exchange plate 2, which may effectively prevent the battery from being affected by an external temperature. The thermal insulation gap layer is located between the first heat exchange plate 2 and the bottom guard plate 8, and is formed into a sealed cavity.

In an embodiment, the side enclosure frame 7 is formed by combining a plurality of side plates 71; and a second heat exchange medium flow channel 72 is arranged in each side plate 71 of the plurality of side plates 71. In an embodiment, there are four side plates 71. In addition, there may also be six, eight or other numbers of side plates 71 capable of being combined to form the mounting space in the battery.

In an embodiment, the battery further includes a flow splitting assembly 9 arranged in the mounting space; and the flow splitting assembly 9 is connected with a water inlet pipe, and the flow splitting assembly 9 includes a first connecting pipe in communication with the first heat exchange medium flow channel 201 and a second connecting pipe in communication with the second heat exchange medium flow channel 72.

The flow splitting assembly is a common component in the art, and thus the structure thereof is not described in detail again.

In an embodiment, as shown in Fig. 15, the battery cell 1 is provided with a positioning step, and the positioning step has a step surface 13; and the support beam 6 has a support surface for supporting the positioning step, and the step surface abuts against the support surface. Specifically, by means of the cooperation of the step surface 13 and the support surface, the depth of the electrode terminal 11 inserted into the mounting groove 21 is relatively suitable. In an embodiment, the supporting surface is provided with an insulating elastic cushion layer, the insulating elastic cushion layer has a viscosity, the insulating elastic cushion layer is arranged between the cover plate of the battery cell 1 and the support surface to separate the battery cell 1 from the support beam 6 in the insulating manner, and the insulating elastic cushion layer has a certain buffering effect to prevent the cover plate from being damaged and deformed due to an impact.

In an embodiment, a plurality of third heat exchange medium flow channels 42 are arranged at intervals on the second heat exchange plate 4, so as to further improve the cooling effect of the battery.

It should also be noted that an elastic insulating pad is arranged between the battery cell 1 and the side enclosure frame 7; and the elastic insulating pad is compressively arranged between the battery cell 1 and the side enclosure frame 7, so as to prevent the battery cell 1 from conducting the side enclosure frame 7.

In an embodiment, the side enclosure frame and the first heat exchange plate are integrally formed, thereby facilitating an improvement in the overall frame strength of the battery.

It should be noted that herein, relational terms, such as first and second, are merely used for distinguishing one entity or operation from another entity or operation, and do not necessarily require or imply that any such actual relationship or order exists between these entities or operations. Moreover, the terms "include", "contain" or any other variants thereof are intended to cover non-exclusive inclusions, such that a process, a method, an article or a device including a series of elements not only includes those elements, but also includes other elements that are not explicitly listed, or also includes elements inherent to such a process, method, article or device.

Although the embodiments of the present disclosure have been shown and described, it can understood by those ordinary skilled in the art that various changes, modifications, substitutions and variations may be made to these embodiments without departing from the principles and spirit of the present disclosure, and the scope of the present disclosure is defined by the appended claims and equivalents thereof.

The above embodiments are merely used to illustrate the technical solutions of the present disclosure, rather than limiting same. Although the present disclosure has been described in detail with reference to the foregoing embodiments, those ordinary skilled in the art should understand that they may still make modifications to the technical solutions recorded in the foregoing embodiments, or make equivalent substitutions to some technical features; and these modifications or substitutions do not make the essence of the corresponding technical solutions depart from the spirit and scope of the technical solutions of the embodiments of the present disclosure.

## Claims

1. A battery, comprising a battery cell (1), a first heat exchange plate (2), and an insulating and heat conducting layer (3), wherein
the battery cell (1) is provided with an electrode terminal (11), and the electrode terminal (11) is provided with a heat exchange surface (12); and the insulating and heat conducting layer (3) is arranged between the heat exchange surface (12) and the first heat exchange plate (2);
the insulating and heat conducting layer (3) is provided with a first side surface and a second side surface that are opposite to each other, the first side surface is attached to the first heat exchange plate (2), and the second side surface is attached to the heat exchange surface (12) or a metal part connected to the electrode terminal (11); and
a mounting groove (21) is formed in the first heat exchange plate (2), the electrode terminal (11) is arranged in the mounting groove (21), and the heat exchange surface (12) at least comprises one side surface of the electrode terminal (11).

2. The battery as claimed in claim 1, wherein the battery cell (1) comprises a cover plate, and the electrode terminal (11) is arranged on the cover plate; and
in a direction perpendicular to a plate surface of the cover plate, a projection area of the electrode terminal (11) projecting to the plate surface is greater than 20% of an area of the plate surface and less than 80% of the area of the plate surface.

3. The battery as claimed in claim 2, wherein the electrode terminal (11) is a columnar structure extending in the direction perpendicular to the plate surface of the cover plate, and the heat exchange surface (12) comprises a top surface of the electrode terminal (11) that is away from the cover plate.

4. The battery as claimed in claim 1, wherein the electrode terminal (11) is provided with a first side surface and a second side surface that are opposite to each other, the mounting groove (21) is provided with a first groove side wall and a second groove side wall that are opposite to each other, and the heat exchange surface (12) comprises the first side surface and the second side surface; and
the first side surface is attached to the first groove side wall in an insulating manner, and the second side surface is attached to the second groove side wall in the insulating manner.

5. The battery as claimed in claim 4, wherein,
the first side surface and the second side surface are both arc surfaces, a shape of the first groove side wall matches that of the first side surface, and a shape of the second groove side wall matches that of the second groove side wall; and/or
the mounting groove (21) is a trench, and in an extension direction perpendicular to the trench, a section of the trench is a rectangular, a V-shaped, an U-shaped, or a trapezoidal.

6. The battery as claimed in claim 1, wherein,
the first heat exchange plate (2) is located on a bottom of the battery cell (1); or
the first heat exchange plate (2) is located on a top of the battery cell (1).

7. The battery as claimed in claim 1, wherein the electrode terminal (11) comprises a base table portion (101) and a strip-shaped insertion portion (102) arranged on the base table portion (101); and
a shape of the mounting groove (21) matches a shape of the strip-shaped insertion portion (102), and the heat exchange surface (12) at least comprises one side surface of the strip-shaped insertion portion (102).

8. The battery as claimed in claim 7, wherein the base table portion (101) is provided with a table top facing the first heat exchange plate (2), and the heat exchange surface (12) further comprises the table top; and
the table top is at least partially attached to the first heat exchange plate (2) in the insulating manner.

9. The battery as claimed in claim 1, wherein the battery cell (1) is provided with an explosion-proof valve (14), the explosion-proof valve (14) and the electrode terminal (11) are arranged on the same side surface of the battery cell (1), a first accommodating groove is formed in the first heat exchange plate (2), a fire extinguishing agent is packaged in the first accommodating groove, a packaging sheet is formed on a notch of the first accommodating groove, and the packaging sheet directly faces the explosion-proof valve (14); or
the battery cell (1) is provided with an explosion-proof valve (14), the explosion-proof valve (14) and the electrode terminal (11) are arranged on two opposite side surfaces of the battery cell (1), the battery further comprises a second heat exchange plate (4), the second heat exchange plate (4) is arranged on a side of the battery cell (1) that is away from the first heat exchange plate (2), and the second heat exchange plate (4) is attached to a housing of the battery cell (1) in the insulating manner, the explosion-proof valve (14) is arranged on the housing, a second accommodating groove (41) is formed in the second heat exchange plate (4) corresponding to the explosion-proof valve (14), a fire extinguishing agent is packaged in the second accommodating groove (41), a packaging sheet is formed on the notch of the second accommodating groove (41), and the packaging sheet directly faces the explosion-proof valve (14).

10. The battery as claimed in claim 1, wherein the battery cell (1) is connected to a bus plate, and the bus plate is welded to the electrode terminal (11);
the bus plate is provided with an attachment plate portion, and an insulating and heat conducting member is arranged between the first heat exchange plate (2) and the attachment plate portion; and
two opposite sides of the insulating and heat conducting member are attached to the attachment plate portion and the first heat exchange plate (2), respectively.

11. The battery as claimed in claim 1, wherein a first heat exchange medium flow channel (201) is arranged in the first heat exchange plate (2), wherein a plurality of first heat exchange medium flow channels (201) are provided; and
the first heat exchange plate (2) is provided with a heat exchange area to be attached to the insulating and heat conducting layer (3), and the first heat exchange medium flow channel (201) is arranged opposite to the heat exchange area.

12. The battery as claimed in claim 11, wherein the battery further comprises a side enclosure frame (7) and a second heat exchange plate (4), wherein
the battery comprises a plurality of battery cells (1), and the side enclosure frame (7), the first heat exchange plate (2) and the second heat exchange plate (4) are combined to form a mounting space for mounting the plurality of battery cells (1), and the plurality of battery cells (1) are arranged in the mounting space in an array.

13. The battery as claimed in claim 12, wherein the first heat exchange plate (2) comprises a support beam portion (23) and a heat exchange portion (24) to be attached to the insulating and heat conducting layer (3), wherein a plurality of support beam portions (23) are provided; and
the plurality of support beam portions (23) are respectively connected to two opposite side edges of the heat exchange portion (24), and the plurality of support beam portions (23) are fixedly connected with the side enclosure frame (7).

14. The battery as claimed in claim 12, wherein the battery further comprises a support beam (6), wherein
the first heat exchange plate (2) is located on a bottom of the battery cell (1) to carry the battery cell (1); and
the support beam (6) is fixedly connected with the side enclosure frame (7), and the first heat exchange plate (2) is connected with the support beam (6).

15. The battery as claimed in claim 14, wherein,
an assembly groove (25) for accommodating the support beam (6) is formed in the first heat exchange plate (2), and the support beam (6) is at least partially located in the assembly groove (25); and/or
the support beam (6) is fixedly connected with the side enclosure frame (7), and the first heat exchange plate (2) is fixedly connected with the side enclosure frame (7).

16. The battery as claimed in claim 14, wherein the battery further comprises a bottom guard plate (8), wherein the bottom guard plate (8) is located on a bottom of the first heat exchange plate (2) to support the first heat exchange plate (2); and
the bottom guard plate (8) is fixedly connected with the side enclosure frame (7).

17. The battery as claimed in claim 14, wherein the side enclosure frame (7) is formed by combining a plurality of side plates (71);
a second heat exchange medium flow channel (72) is arranged in each side plate (71) of the plurality of side plates (71); and
the battery further comprises a flow splitting assembly (9) arranged in the mounting space; and the flow splitting assembly (9) is connected with a water inlet pipe, and the flow splitting assembly (9) comprises a first connecting pipe in communication with the first heat exchange medium flow channel (201) and a second connecting pipe in communication with the second heat exchange medium flow channel (72).

18. The battery as claimed in claim 14, wherein the battery cell (1) is provided with a positioning step, and the positioning step is provided with a step surface (13); and
the support beam (6) is provided with a support surface for supporting the positioning step, and the step surface (13) abuts against the support surface.

19. The battery as claimed in claim 12, wherein a plurality of third heat exchange medium flow channels (42) are arranged at intervals on the second heat exchange plate (4).
